# EUROPEAN PATENT SPECIFICATION

(11) **EP 3 043 465 B1**
(45) Date of publication and mention of the grant of the patent: **24.03.2021**
(21) Application number: 14842384.1
(22) Date of filing: 30.06.2014
(51) Int. Cl.: H02P 6/18, H02P 6/185, H02P 23/03

(54) **CONTROL DEVICE AND AC ELECTRIC MOTOR SYSTEM USING SAME**
STEUERUNGSVORRICHTUNG UND GLEICHSTROM-ELEKTROMOTORSYSTEM DAMIT
DISPOSITIF DE COMMANDE ET SYSTÈME DE MOTEUR ÉLECTRIQUE EN CA L'UTILISANT

(30) Priority: 06.09.2013 JP 2013185040
(43) Date of publication of application: 13.07.2016
(73) Proprietor: Hitachi Industrial Equipment Systems Co., Ltd., Tokyo 101-0022 (JP)
(72) Inventor: IWAJI, Yoshitaka, Tokyo 100-8280 (JP); TAKAHATA, Ryoichi, Tokyo 100-8280 (JP); TOBARI, Kazuaki, Tokyo 100-8280 (JP); ONUMA, Yusaku, Tokyo 101-0022 (JP)
(74) Representative: Mewburn Ellis LLP
(86) International application number: PCT/JP2014/067439
(87) International publication number: WO 2015/033651

(56) References cited:
- EP-A1- 2 755 319
- JP-A- 2011 200 058
- JP-A- 2011 217 578
- JP-A- 2012 010 477
- JP-A- 2012 010 477
- US-A1- 2008 100 243
- US-A1- 2009 200 971
- US-A1- 2011 234 133
- US-A1- 2013 069 575
- YOSHITAKA IWAJI ET AL: "Position-sensorless control method at low speed for permanent magnet synchronous motors using induced voltage caused by magnetic saturation", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21 June 2010 (2010-06-21), pages 2238-2243, XP031727499, ISBN: 978-1-4244-5394-8
- Y. IWAJI ET AL: "Position sensorless control method at zero speed region for permanent magnet synchronous motors based on block commutation drive", 2013 INTERNATIONAL ELECTRIC MACHINES & DRIVES CONFERENCE, 1 May 2013 (2013-05-01), pages 498-504, XP055406869, DOI: 10.1109/IEMDC.2013.6556142 ISBN: 978-1-4673-4973-4

## Description

### TECHNICAL FIELD

The present invention relates to a technology for driving an electric motor used for an alternating current (AC) electric motor system.

### BACKGROUND ART

A motor driving apparatus has been used for rotation speed control of, for example, a fan, a pump, and a compressor, a torque assist apparatus of an electric power steering, and a conveyor, an elevator, positioning control in manufacturing equipment in fields such as consumer electronics, industries, and automobiles. A permanent-magnet synchronous motor (hereinafter referred to as a "PM motor") corresponding to a small-sized and high efficient alternating current (AC) electric motor has been widely used for the motor driving apparatus in the fields. However, information about a magnetic pole position of a motor rotor is necessary to drive the PM motor, and a position sensor therefor such as a resolver, a hall integrated circuit (IC) is essential. Recently, sensorless control has come into use to control revolutions per minute (RPM) and a torque of the PM motor without using the position sensor.

When sensorless control is implemented, it is possible to reduce cost for the position sensor (cost for the sensor, cost for wiring of the sensor, or cost for installation adjustment operation of the sensor). Moreover, since the sensor is not be used, there are advantages in that the apparatus may be miniaturized and used in poor surroundings.

Currently, sensorless control of the PM motor has been employing a scheme in which an induced voltage (speed induced voltage) generated due to rotation of a rotor is directly detected and used as position information of the rotor to drive the PM motor, a position estimation technology for estimating and calculating a rotor position from a mathematical model of the PM motor, and the like.

Examples of a sensorless scheme of the PM motor based on a generated induced voltage include a scheme based on zero-crossing of the induced voltage. In this scheme, the PM motor is driven using 120° conduction, a voltage of a non-conducting phase is detected, timing corresponding to zero-crossing of the voltage is obtained by a comparator, and phase information is obtained. However, this scheme is a scheme based on a speed induced voltage, and thus the PM motor cannot be driven in a stop/low-speed region.

In addition, a position sensorless scheme not using a speed induced voltage has been proposed. Examples of a position sensorless scheme in a zero-speed region in which a speed induced voltage is not generated include JP 2009-189176 A (Patent Document 1). In Patent Document 1, when pulse voltages are applied to two phases of a PM motor, an induced voltage corresponding to a position of a rotor of the PM motor is generated in a non-conducting phase. Therefore, when the induced voltage (magnetic saturation induced voltage) is observed, a dependence on a position (angle) of the rotor is observed, and position sensorless driving in a low-speed region can be performed. The magnetic saturation induced voltage is a voltage generated in the non-conducting phase, and thus a control side needs to select a detection phase to read the voltage. Therefore, when conducting phases are switched at a time point at which a level of the magnetic saturation induced voltage of the non-conducting phase reaches a preset threshold value while the level is observed, position sensorless driving can be implemented. Here, accuracy of setting of the "threshold value" is important in switching between conducting phases.

JP 2012-10477 A (Patent Document 2) discloses an automatic adjustment function related to the threshold value. In Patent Document 2, automatic adjustment of the threshold value is performed in the following procedure. First, for example, a direct current is allowed to flow in mode 1, and a rotor is attracted to a position of the conduction mode. Next, the mode proceeds to a next one, and a direct current is conducted in a similar manner. In this instance, immediately after the modes are switched, a voltage of a non-conducting phase is identical to a threshold voltage. Thereafter, a level of the threshold value, which is important in Patent Document 1, may be obtained from actual equipment by repetition thereof.

US 2011/234133 A1 describes a drive apparatus and drive method for switching an energization mode when a voltage of a non-energized phase of a brushless motor crosses a threshold.

### CITATION LIST

### PATENT DOCUMENT

Patent Document 1: JP 2009-189176 A
Patent Document 2: JP 2012-10477 A

### SUMMARY OF THE INVENTION

### PROBLEMS TO BE SOLVED BY THE INVENTION

In Patent Document 1, the motor may generate a driving force without step out in a stop/low-speed state. However, there is no description on automatic adjustment of a threshold value, which is an important set constant in sensorless driving.

Patent Document 2 includes a description on the above-described automatic adjustment of the threshold value. However, Patent Document 2 has the following problems.

First, a rotor is once fixed by applying a direct current in a certain conduction mode. Thereafter, the mode is switched to a subsequent conduction mode to conduct a direct current, and an induced voltage obtained immediately after the switching is collected. Therefore, when inertia of a PM motor is small, the rotor moves simultaneously with the switching, and thus an accurate threshold value cannot be collected.

Second, a PM motor of a 200 V class is designed by optimizing (minimizing) the amount of a magnet of a rotor. Instead, the PM motor is designed such that a rotating torque is obtained by increasing the number of turns of a stator in many cases. In this case, the amount of magnetic flux of the PM motor greatly varies due to a current value of the stator. As a result, an accurate level of the threshold value varies. In other words, on implementing sensorless control disclosed in Patent Document 1, the threshold value needs to be set to an optimum value according to the current value or the rotating torque of the PM motor. Otherwise, sufficient torque that satisfies a specification of the PM motor cannot be obtained, and also there is a possibility that step out or unstable vibration is incurred.

An object of the invention is to achieve high torque without using a rotor position sensor around a zero speed and provide a highly stable AC electric motor driving control device and an AC electric motor system using the same.

### SOLUTIONS TO PROBLEMS

At least one of the needs arising from the above mentioned patent documents may be met by the subject-matter of the independent claims of the present application. Beneficial embodiments are defined in the dependent claims and described in the following specification.

For example, configurations of claims are employed to solve the above-mentioned problem. The invention includes a plurality of means for solving the above-mentioned problem. Examples thereof include an AC electric motor control device for selecting and conducting two phases of a three-phase AC electric motor, switching conducting phases based on a comparison between a voltage value of a remaining non-conducting phase and a threshold value for the voltage value, and rotatably driving the three-phase AC electric motor, in which setting of the threshold value is provided with a threshold value detection mode for detecting the threshold value, a rotor of the three-phase AC electric motor is once fixed by direct current (DC) conduction in the threshold value detection mode, and then an AC current is conducted between two phases to obtain the threshold value.

### EFFECTS OF THE INVENTION

According to the invention, it is possible to provide a high-torque and stable control device over a wide range from a stopped state to a high-speed region, and an AC electric motor system using the same.

### BRIEF DESCRIPTION OF THE DRAWINGS

Fig. 1 is a diagram illustrating a configuration of an AC electric motor system including a control device and an AC electric motor according to Embodiment 1 to which the invention is applied.
Fig. 2 is a diagram illustrating an operation at the time of DC conduction to a motor according to Embodiment 1.
Fig. 3 is a diagram illustrating an operation during AC conduction to the motor according to Embodiment 1.
Fig. 4 is a flowchart related to acquisition of a threshold value according to Embodiment 1.
Fig. 5 is a flowchart related to acquisition of a threshold value according to Embodiment 2 to which the invention is applied.
Fig. 6 is a diagram illustrating application of a bipolar pulse voltage to an AC electric motor according to Embodiment 3 to which the invention is applied.
Fig. 7 is a diagram illustrating a magnetic saturation induced voltage and a threshold voltage in a normal rotation/reverse rotation direction according to Embodiment 3.
Fig. 8 (Fig. 8A and Fig. 8B) is a flowchart related to acquisition of a threshold value according to Embodiment 3.
Fig. 9 is a block diagram illustrating a controller of an AC electric motor control device according to Embodiment 4 to which the invention is applied.
Fig. 10 is a diagram illustrating a rise in a current waveform at the time of acquisition of a threshold value according to Embodiment 4.
Fig. 11 is a block diagram illustrating a controller of an AC electric motor control device according to Embodiment 5 to which the invention is applied.
Fig. 12 is a waveform diagram illustrating a line voltage, a phase current, and an induced voltage of a non-conducting phase according to Embodiment 5.
Fig. 13 is a waveform diagram illustrating a line voltage, a phase current, and an induced voltage of a non-conducting phase according to Embodiment 5.
Fig. 14 is a waveform diagram illustrating a line voltage, a phase current, and an induced voltage of a non-conducting phase according to Embodiment 5.
Fig. 15 is a block diagram illustrating a speed/current controller of an AC electric motor control device according to Embodiment 6 to which the invention is applied.
Fig. 16 is a diagram illustrating a waveform at the time of activation of the AC electric motor control device according to Embodiment 6
Fig. 17 is a block diagram illustrating a speed/current controller of an AC electric motor control device according to Embodiment 7 to which the invention is applied.
Fig. 18 is a diagram illustrating a current waveform in a steady state of the AC electric motor control device according to Embodiment 7.
Fig. 19 is a block diagram illustrating a speed/current controller of an AC electric motor control device according to Embodiment 8 to which the invention is applied.
Fig. 20 is a diagram illustrating a dependence of a threshold value of an AC electric motor on a current according to Embodiment 8.
Fig. 21 is a diagram illustrating ringing of an induced voltage of a non-conducting phase of an AC electric motor control device according to Embodiment 9 to which the invention is applied.
Fig. 22 is a diagram related to measurement of a period of ringing included in the induced voltage of the non-conducting phase of the AC electric motor control device according to Embodiment 9.
Fig. 23 is a block diagram illustrating a controller of the AC electric motor control device according to Embodiment 9.
Fig. 24 is a waveform diagram related to an overlapping period of an AC electric motor control device according to Embodiment 10 to which the invention is applied.
Fig. 25 is a block diagram illustrating a controller of the AC electric motor control device according to Embodiment 10.
Fig. 26 is a diagram of an AC electric motor system that includes a general-purpose inverter using an AC electric motor control device according to Embodiment 11 to which the invention is applied.
Fig. 27 is a diagram illustrating application of a pulse voltage between two phases according to a conventional example.
Fig. 28 is a diagram illustrating a dependence of a magnetic saturation induced voltage on a rotor position according to a conventional example.
Fig. 29 is a diagram related to a conducting phase, a conduction mode and a non-conducting phase of an AC electric motor, an induced voltage generated in the non-conducting phase, and a threshold voltage for switching between conduction modes according to a conventional example.
Fig. 30 is a diagram illustrating a relation between a conduction mode and a rotor position, and DC conduction in mode 1 according to a conventional example.
Fig. 31 is a diagram illustrating an induced voltage of a non-conducting phase and a change in rotor position at the time of switching between conduction modes according to a conventional example.

### MODE FOR CARRYING OUT THE INVENTION

First, a position sensorless scheme, which does not use a speed induced voltage, as a premise in the invention will be described using drawings.

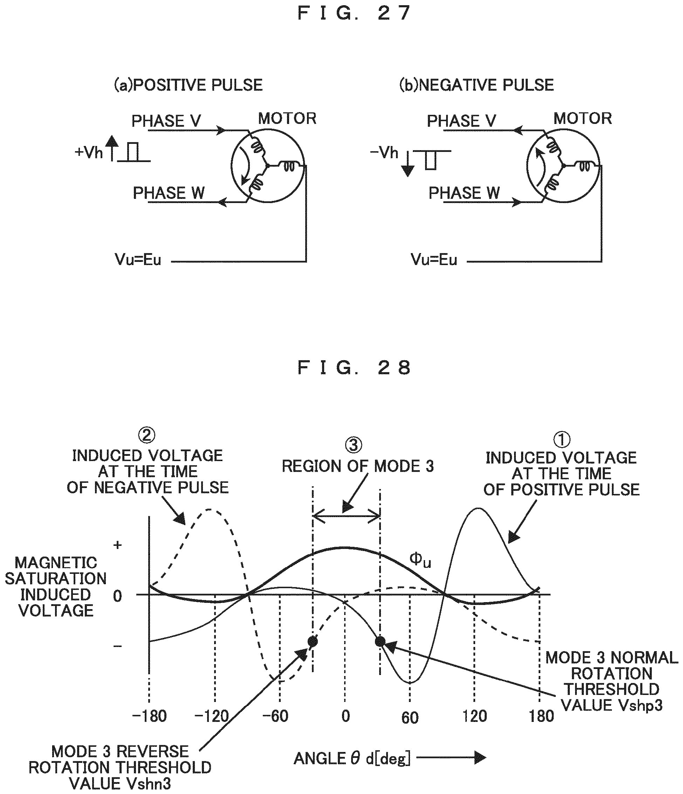

In Patent Document 1, as illustrated in Figs. 27(a) and 27(b), when pulse voltages are applied to two phases of a PM motor, an induced voltage corresponding to a position of a rotor of the PM motor is generated in a non-conducting phase. In Fig. 27, a phase U corresponds to the non-conducting phase. The induced voltage is a voltage generated when an inductance in the motor minutely changes due to a relation between a flowing current and a magnetic flux of a permanent magnet attached to the rotor of the PM motor, and may be observed in a stopped state. Therefore, when a magnetic saturation induced voltage is observed, a dependence on a position (angle) of the rotor as illustrated in Fig. 28 is observed, and position sensorless driving may be performed in a low-speed region. The induced voltage is referred to as the magnetic saturation induced voltage to distinguish the induced voltage from a speed induced voltage which is generated when the rotor rotates. The magnetic saturation induced voltage is a voltage generated in the non-conducting phase, and thus a control side needs to select a detection phase to read the voltage.

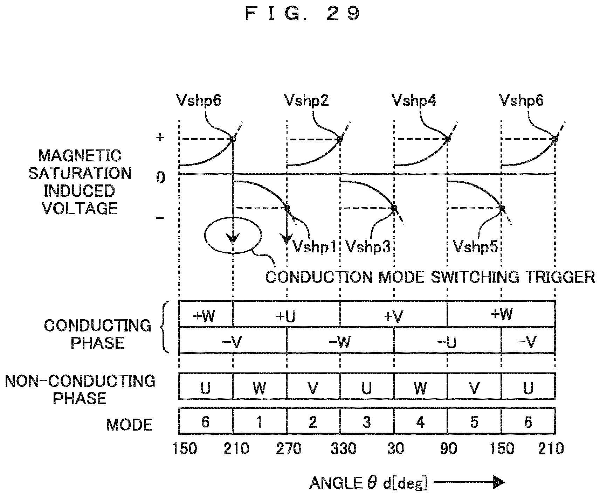

Fig. 29 illustrates a relation of a conducting phase, a non-conducting phase and a magnetic saturation induced voltage with respect to a position θd of a rotor. Two phases in which a turning force reaches a greatest value are selected as the conducting phase according to θd. When the conducting phases are switched at a time point at which a level of the magnetic saturation induced voltage of the non-conducting phase reaches a preset threshold value, that is, Vshp1 to Vshp6 of Fig. 29 while the level is observed, position sensorless driving can be implemented.

For example, referring to Fig. 29, when a position of the rotor is in mode 1 (210 [deg] ≤ θd ≤ 270 [deg]), conducting from a phase U to a phase V is performed, and a turning force in a normal rotation direction is generated in the PM motor. In response to the rotor rotating, an induced voltage of a phase W, which is a non-conducting phase in mode 1, starts to decrease. Then, the voltage is identical to a threshold value Vshp1 at θd = 270 [deg]. As a result, a switching trigger of a conduction mode is generated, and conduction modes are switched. As is clear here, an accuracy of setting of a "threshold value" is important in switching between conducting phases.

Patent Document 2 discloses an automatic adjustment function related to the threshold value. The threshold value is basically determined according to a magnetic circuit characteristic of the motor. However, the threshold value varies depending on a variation in magnetic materials, a manufacturing error, or accuracy of a voltage detection circuit. Therefore, the automatic adjustment function is desired to correct an individual variation of the PM motor or an inverter that drives the PM motor.

In Patent Document 2, automatic adjustment of the threshold value is performed in the following procedure.

First, for example, a direct current is allowed to flow in mode 1, and a rotor is attracted to a position of the conduction mode. Next, the mode proceeds to a next one, and a direct current is conducted in a similar manner. In this instance, immediately after the modes are switched, a voltage of a non-conducting phase is identical to a threshold voltage.

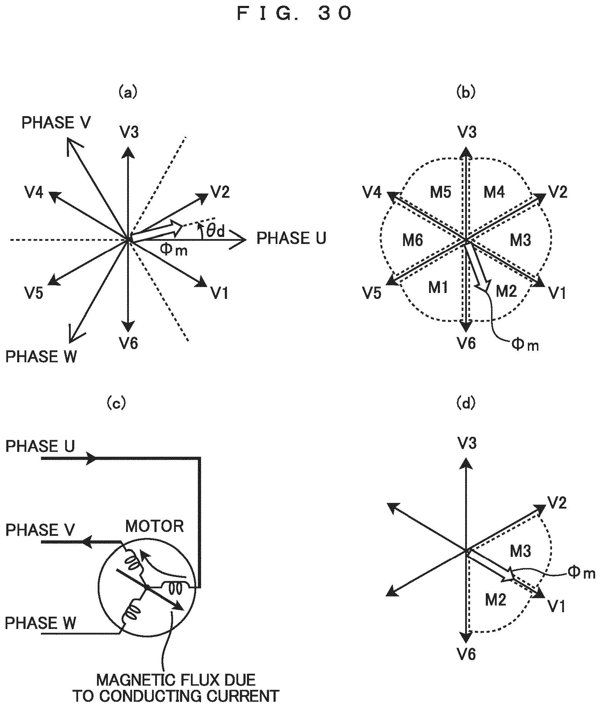

Fig. 30(a) illustrates conducting vectors V1 to V6 of modes 1 to 6. For example, V1 is a voltage vector at the time of selecting mode 1 (that is, voltage vector at the time of conducting from the phase U to the phase V). Mode 1 is selected when a magnetic flux Φm of the rotor is present in a region M1 of Fig. 30(b). However, when a direct current is allowed to flow in, a magnetic flux due to the current as illustrated in Fig. 30(c) is generated in the motor, and the rotor is attracted thereto to stop. A fixed state due to the direct current of V1 corresponds to Fig. 30(d).

A position of Φm of Fig. 30(d) is present at a boundary of mode 2 and mode 3. In other words, when an induced voltage of a non-conducting phase at the position is observed, it is possible to obtain a threshold value for proceeding from mode 2 to mode 3.

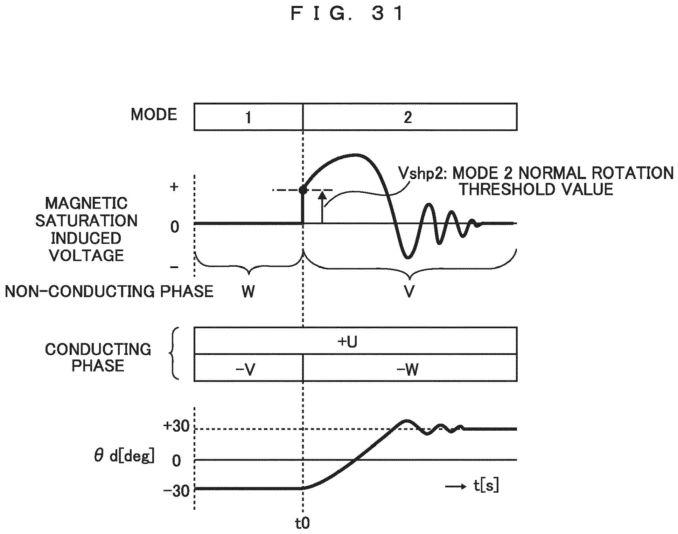

As illustrated in Fig. 31, when a direct current is conducted in a state of mode 1 to fix the rotor, a phase of the rotor at the time is 30 [deg]. Here, when a conducting phase is switched to mode 2, and an induced voltage of a phase V of a non-conducting phase is sampled immediately after switching, the sampled voltage corresponds to a threshold value of switching from mode 2 to mode 3.

When DC conduction in mode 2 is continued without change, the rotor moves to a position of +30 [deg]. This time, when the mode is switched to mode 3, a threshold value of switching from mode 3 to mode 4 is obtained. When this operation is repeatedly performed, a level of the threshold value, which is important in Patent Document 1, may be obtained from actual equipment.

As described in the foregoing, Patent Document 2 has a problem in that the rotor moves when an induced voltage is collected immediately after switching, and thus an accurate threshold value cannot be collected, a problem in that a threshold value needs to be set to an optimum value according to a current value or a rotating torque of the PM motor, and the like. Embodiments of the invention for solving the above-mentioned problems will be described below using drawings.

### Example 1

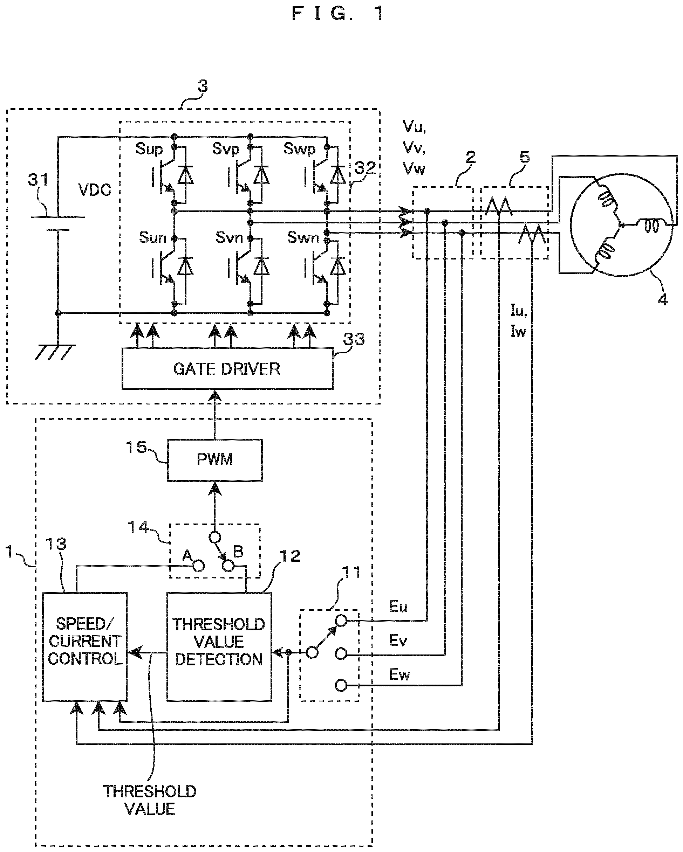

A description will be given of an AC electric motor control device according to Embodiment 1 of the invention using Figs. 1 to 4.

An object of the control device is to drive a three-phase AC electric motor 4. As illustrated in Fig. 1, the control device is largely divided into a controller 1, a voltage detector 2, an inverter 3 which includes a DC power source 31, a main inverter circuit 32, and a gate driver 33, and a current sensor 5. In addition, the three-phase AC electric motor (PM motor) 4 corresponding to an object to be driven and the control device are included in an AC electric motor system.

In the present embodiment, the PM motor is given as an example of the object to be driven. However, another type of AC electric motor may be applied if the AC electric motor is an electric motor, a magnetic saturation characteristic of which can be obtained with respect to a rotor position.

Referring to Fig. 1, the controller 1 includes a multiplexer 11 for selecting an induced voltage of a non-conducting phase from three phases, a threshold value detector 12 which is a control block for detecting a threshold value, a speed/current controller 13 which functions at the time of conduction driving, a switcher 14 for switching between a conduction driving time and a threshold value detection mode, and a pulse width modulation (PWM) generator 15 for pulse width modulation of a voltage instruction.

In conduction driving, the switcher 14 is switched to a side "A", and conducting phases are switched while an induced voltage of a non-conducting phase, which is detected each time sampling is performed, is compared with a preset threshold value. In this instance, a torque and an RPM of the PM motor are controlled in this block. An operation of the speed/current controller 13 basically uses a known technology without change.

In addition, in the threshold value detection mode, the switcher 14 is switched to a side "B", and conducting to the PM motor is performed according to a preset flow to accurately obtain a "threshold value", which is important at the time of conduction driving.

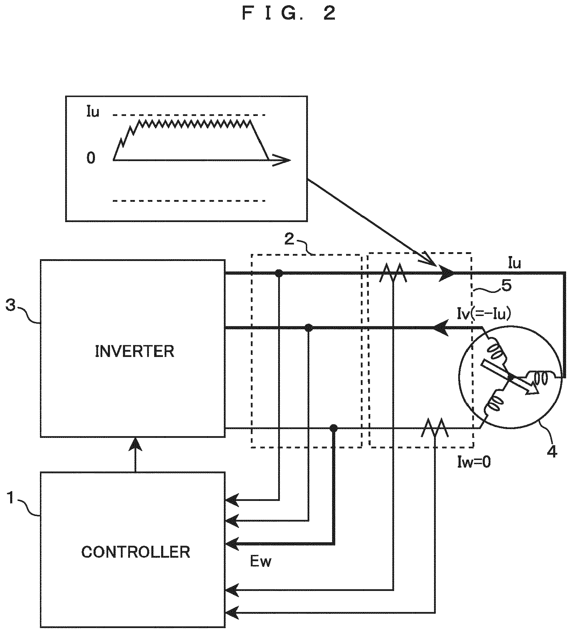

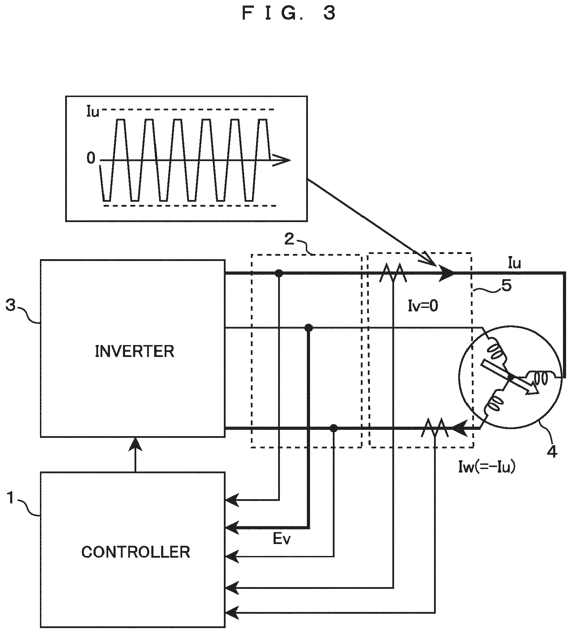

The flow will be described in detail using Figs. 2 and 3. First, as illustrated in Fig. 2, a direct current is conducted from a phase U to a phase V. In this instance, a magnetic flux due to the direct current is generated inside the PM motor 4, and a rotor is moved and fixed thereto such that the rotor is attracted thereto. In a conduction mode of Fig. 2, a phase U is a positive phase and a phase V is a negative phase, which corresponds to conduction of mode 1. Thus, a voltage vector of V1 of Fig. 30(a) is applied. The rotor is once fixed to this position (θd = -30 [deg]). Subsequently, conducting phases are switched, and conducting from the phase U to a phase W is performed as illustrated in Fig. 3. However, in this case, an alternating current, an average of which is zero, is applied. Conducting from the phase U to the phase W corresponds to mode 2. However, a rotor position θd = -30 [deg] fixed at this time is at a boundary from mode 2 to mode 3. Therefore, herein, an induced voltage of a non-conducting phase is identical to a threshold voltage at the time of switching from mode 2 to mode 3. Thus, a threshold voltage may be obtained by conduction of this AC current.

Since the applied current is an alternating current, an average of a generated torque is zero, and the rotor does not rotate and maintains a state in which a position thereof is fixed in mode 1. This is greatly different from Patent Document 2. Therefore, since the rotor does not move, a threshold value may be accurately obtained.

A frequency corresponding to a carrier frequency at the time of performing PWM is considered suitable for a frequency of an alternating current flowing for measurement of a threshold value. However, another frequency has no problem when an induced voltage is sufficiently obtained at the frequency. However, when a frequency of an alternating current is excessively low, vibrations may be generated in the rotor, and thus it is not preferable. Even though a frequency depends on a structure of the rotor, a frequency of hundreds of Hz or more has no problem when a mechanical time constant is considered.

In addition, when an appropriate value of a threshold value changes according to a driving condition of the PM motor (in particular, a current strength), the condition may be satisfied by changing an amplitude of an AC current such that an alternating current corresponding to an actual driving current flows.

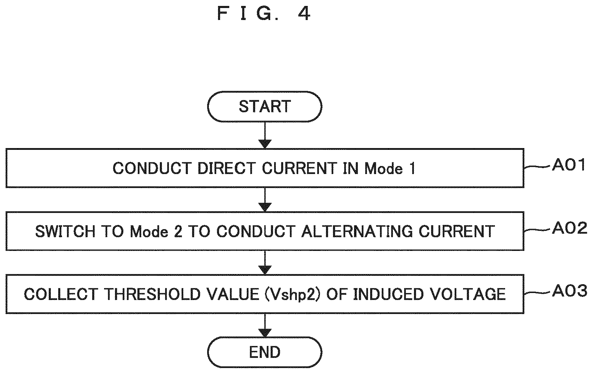

A flowchart illustrating this operation corresponds to Fig. 4. First, a direct current is conducted in A01. The rotor is fixed, and then conduction modes are switched to conduct an alternating current in A02. An induced voltage of a non-conducting phase (phase W) obtained in this state corresponds to a threshold value of switching from mode 2 to mode 3. As illustrated in Fig. 29, all threshold values of the PM motor are targets in principle. Thus, switching threshold values of six respective modes are obtained from one threshold value.

In other words, the rotor of the three-phase AC electric motor is once fixed by DC conduction, and then an AC current is conducted between two phases to obtain a threshold value.

As described in the foregoing, when the AC electric motor control device according to the present embodiment is used, it is possible to accurately obtain a threshold value, which is important in sensorless driving. When conducting phases are successively switched using the obtained threshold, it is possible to achieve a position sensorless driving system from a low speed capable of performing high-torque driving.

In other words, according to the present embodiment, it is possible to achieve an algorithm that allows appropriate switching between conducting phases according to a load torque or a load current of the PM motor and automatic collection of a level of a threshold value for the switching in sensorless control for performing conduction between two phases among three phases and determining switching timing of conducting phases based on an induced voltage of a remaining non-conducting phase.

As a result, it is possible to provide a high-torque and stable AC electric motor driving system over a wide range from a stopped state to a high-speed region with respect to various types of PM motors.

### Embodiment 2

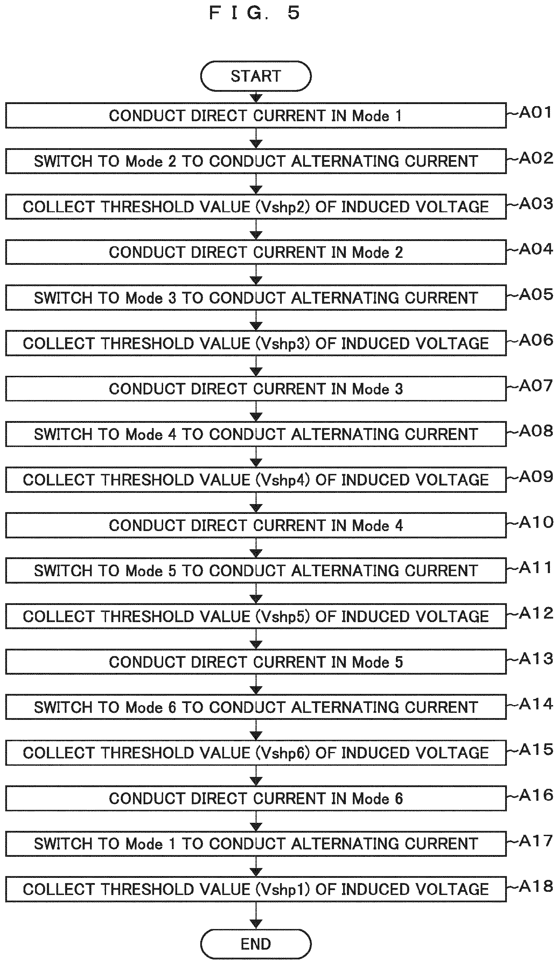

Next, a description will be given of an AC electric motor control device according to Embodiment 2 of the invention using Fig. 5.

In Fig. 4 described above, a threshold value is obtained only once, and threshold values of six respective modes are determined based on a level of the obtained threshold value. However, in an actual PM motor, an induced voltage is likely to be different among respective phases due to a manufacturing error or a variation in a magnetic material of the motor. In particular, a detection circuit for detecting an induced voltage is different among respective phases. Thus, these problems are desired to be solved.

In this regard, as illustrated in Fig. 5, threshold values are obtained with respect to all conduction modes. Referring to Fig. 5, first, a direct current is conducted in mode 1 in A01. Subsequently, the mode is switched to mode 2 to apply an alternating current in A02, and Vshp2 corresponding to an induced voltage at this time is obtained in A03. Subsequently, a direct current is conducted in mode 2 in A04. Subsequently, the mode is switched to mode 3 to apply an alternating current in S05, and Vshp3 corresponding to an induced voltage at this time is obtained in A06. Thereafter, an operation of conducting a direct current, switching modes to apply an alternating current, and collecting a threshold value is repeated. In this way, when DC conduction and AC conduction are performed while conduction modes are switched, correct switching threshold values may be obtained in all modes.

In other words, the rotor is once fixed by conducting a direct current between two phases of the three-phase AC electric motor. Thereafter, a threshold voltage is obtained by conducting an AC current between two phases corresponding to a different combination from the phases between which the direct current is conducted. A threshold value is detected through at least one combination of the DC conduction and the AC conduction.

As described in the foregoing, when the AC electric motor control device according to the present embodiment is used, it is possible to accurately obtain a threshold value necessary for sensorless driving in consideration of a variation of each phase.

### Embodiment 3

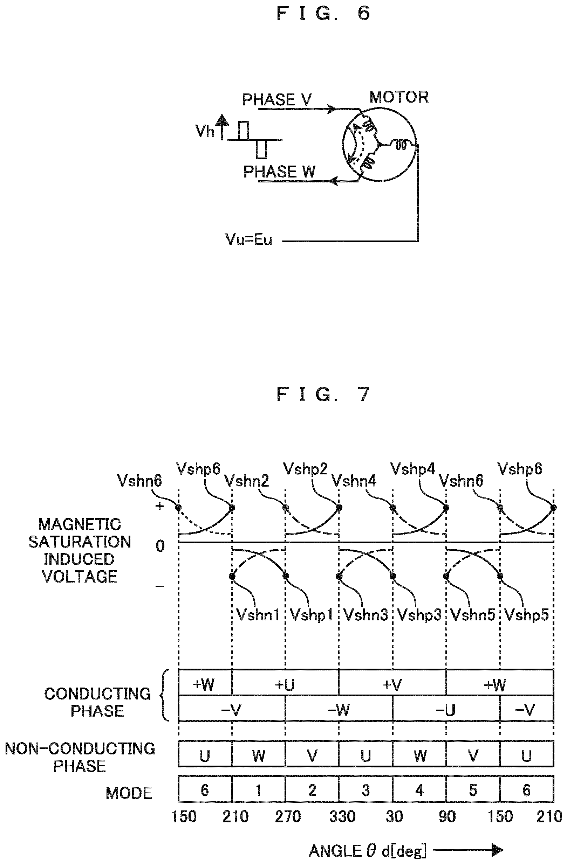

Next, a description will be given of an AC electric motor control device according to Embodiment 3 of the invention using Figs. 6, 7, and 8. In other words, while a rotation direction of the rotor is fixed (normal rotation direction) in each of Embodiments 1 and 2, the present embodiment proposes a method of setting a threshold value in consideration of a reverse rotation.

An accurate rotor position needs to be known in order to control a speed or a torque of the rotor around a zero speed. Bipolar PWM illustrated in Fig. 6 is adopted to implement normal rotation and reverse rotation. "Bipolar" refers to a PWM scheme in which pulses are formed without fail both on a positive side and a negative side. When induced voltages are observed with respect to the pulses on the both sides, respectively, a relation of Fig. 7 is obtained. When a pulse that generates a torque in the normal rotation direction is set to a "normal rotation pulse", and a reverse pulse thereof is set to a "reverse rotation pulse", an obtained induced voltage is as in Fig. 7. Here, while the normal rotation pulse is as in the related art, an induced voltage according to the reverse rotation pulse is newly described. When a threshold value of reverse rotation is set similarly to a threshold value of normal rotation, continuous driving of normal rotation/reverse rotation can be performed. Description related to this reverse rotation driving has been previously disclosed in Document 1 ("Position Sensorless Drive in Low-Speed Region for Permanent Magnet Synchronous Motors Using Induced Voltage Caused by Magnetic Saturation ∼Normal/reverse rotation driving around zero speed-" Hei 23, National Convention record I.E.E. Japan, Industry Applications Society, No. 1-163, pp. 1-715 to 1-720 (2011)).

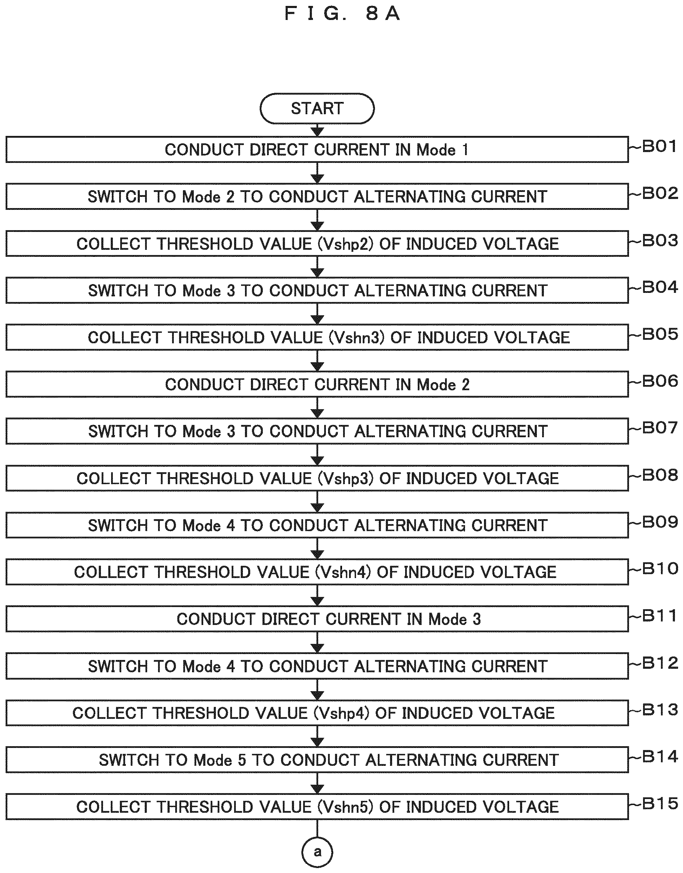

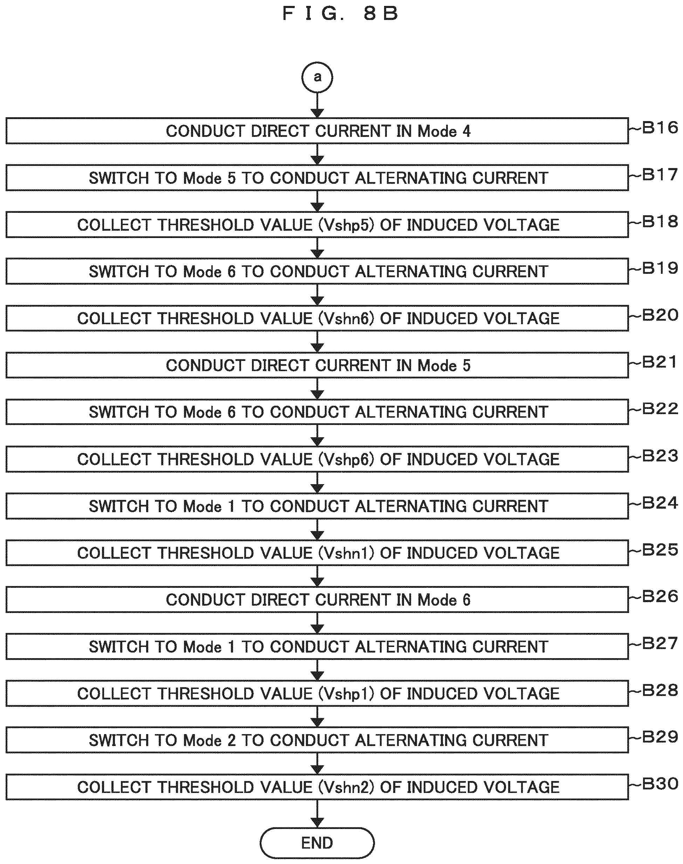

The present embodiment achieves automatic adjustment of two types of threshold values (threshold values Vshp1 to 6 in the normal rotation direction and threshold values Vshn1 to 6 in a reverse rotation direction). Fig. 8 (Fig. 8A and Fig. 8B) is a flowchart for automatically measuring the threshold values. Similarly to Fig. 5, the threshold values are obtained with respect to all conduction modes.

In other words, referring to Fig. 8 (Fig. 8A and Fig. 8B), first, a direct current is conducted in mode 1 in B01. Subsequently, an alternating current is conducted in mode 2 in B02, and a threshold value from mode 2 to mode 3 is set. Thereafter, in this state, the mode is switched to mode 3, and an alternating current is conducted again in B03. At this time, a threshold value of reverse rotation from mode 3 to mode 2 is obtained. Since a position of the rotor fixed in mode 1 is present on a boundary line of modes 2 and 3 as illustrated in Fig. 30(d), it is possible to obtain both a threshold value in the normal rotation direction from mode 2 to mode 3 and a threshold value in the reverse rotation direction from mode 3 to mode 2 at a time.

When this operation of obtaining threshold values is continued at the same time after mode 2, it is possible to obtain threshold values in the normal rotation direction and the reverse rotation direction in all modes of the PM motor.

In other words, the rotor is once fixed by conducting a direct current between two phases of the three-phase AC electric motor. Thereafter, threshold voltages are obtained by conducting AC currents between two types of two phases, respectively, corresponding to different combinations from the phases between which the direct current is conducted. The threshold values are detected through at least one combination of the DC conduction and the AC conduction.

### Embodiment 4

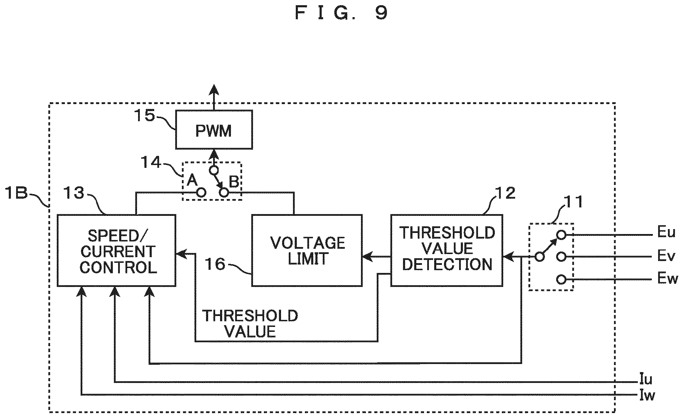

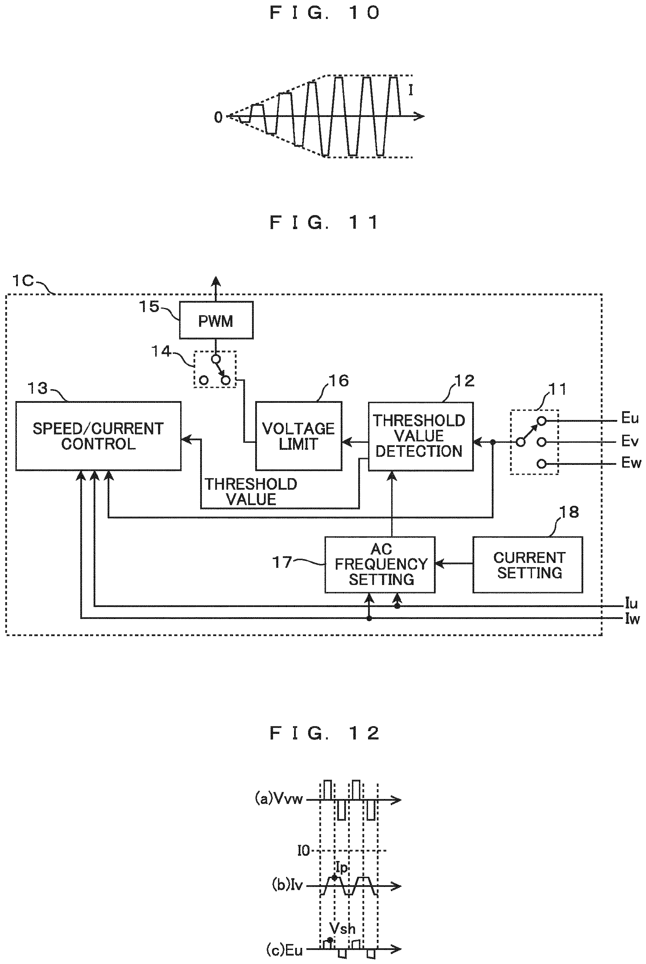

Next, a description will be given of an AC electric motor control device according to Embodiment 4 of the invention using Figs. 9 and 10.

The above embodiments describe that, when an alternating current is conducted to obtain a threshold value, a current having a strength equivalent to a strength obtained at the time of actual driving of a PM motor may flow, and a more accurate threshold value may be obtained. An AC current does not generate an average turning force since an average value thereof is zero. However, when an alternating current having high amplitude is instantaneously applied in a stepped form, a rotor may instantaneously move. In this instance, the rotor may move in various manners depending on inertia or friction of the rotor. However, it is desirable that a steep variation be avoided as possible by implementing soft start.

The present embodiment provides an operation for gradually increasing amplitude of an AC current such that a shock is not delivered to the rotor as possible when an alternating current starts to be applied.

Fig. 9 is a block diagram of a controller 1B corresponding to a particular part of the present embodiment. When this block is used instead of the controller 1 of Fig. 1, the fourth embodiment may be implemented.

A voltage limiter 16 is newly applied in Fig. 9. However, other blocks are the same as those of Fig. 1. The voltage limiter 16 limits a rate of change of amplitude of an AC voltage applied to the PM motor when a threshold voltage is obtained. When the voltage limiter 16 is introduced, a current waveform gradually increases in a form of a lamp as in Fig. 10, and an impact on the rotor may be removed.

As described in the foregoing, according to the present embodiment, it is possible to suppress a variation in position of the rotor when an alternating current starts to be applied, and thus it is possible to further reduce a detection error of a threshold value.

### Embodiment 5

Next, a description will be given of an AC electric motor control device according to Embodiment 5 of the invention using Figs. 11 to 14.

The above embodiments describe that, when an alternating current is conducted to obtain a threshold value, a current having a strength equivalent to a strength obtained at the time of actual driving of a PM motor may flow, and a more accurate threshold value may be obtained. However, a current, which is obtained when an alternating current is applied, has a dependence on a frequency in addition to amplitude of the alternating current. Thus, a sufficient AC current may not be allowed to flow depending on conditions.

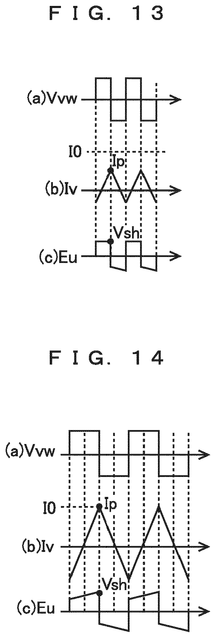

This phenomenon will be described using Figs. 12 to 14. For example, it is presumed that, when a pulse-like AC voltage is applied between lines of a phase V and a phase W as in Fig. 12 (a condition of conduction mode 3), a phase current Iv is generated, but a maximum value (peak value) Ip thereof does not reach a predetermined value 10. Therefore, a pulse width is increased up to a maximum as in Fig. 13. However, the value 10 is not reached. In other words, it is understood that a sufficient AC current cannot flow at this frequency. In this case, a maximum current up to a desired value may flow when a frequency of an alternating current is decreased as in Fig. 14.

Automatic implementation of these operations of Figs. 12 to 14 corresponds to the present Embodiment 5.

Fig. 11 is a block diagram of a controller 1C corresponding to a particular part of the present embodiment. When this block is used instead of the controller 1 of Fig. 1, Embodiment 5 may be implemented.

An AC frequency setting unit 17 and a current setting unit 18 are newly applied in Fig. 11. However, other blocks are the same as those of Fig. 1. The AC frequency setting unit 17 verifies whether a peak value of a phase current is identical to a value 10 set by the current setting unit 18, and performs an operation such that an AC frequency is decreased when the values are not identical to each other. As a result of this operation, an AC current having strength required for acquisition of a threshold value may be applied to a PM motor, and detection accuracy of a threshold value may be ensured.

In other words, the controller includes a means having a function of presetting amplitude of an AC current to adjust a frequency of the AC current such that a set value of the amplitude of the AC current is reached.

### Embodiment 6

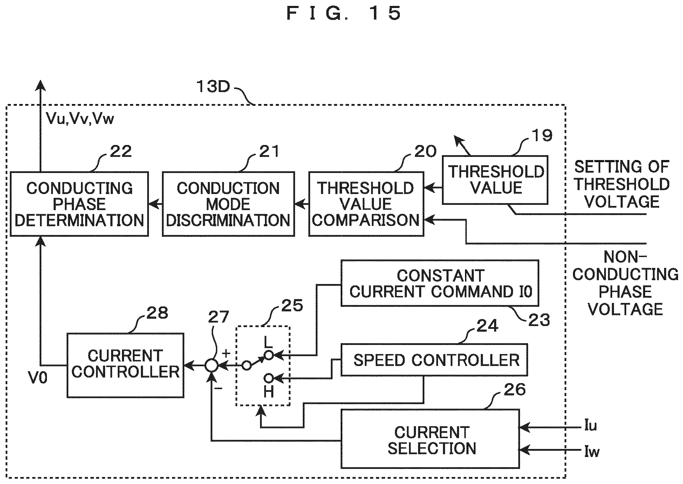

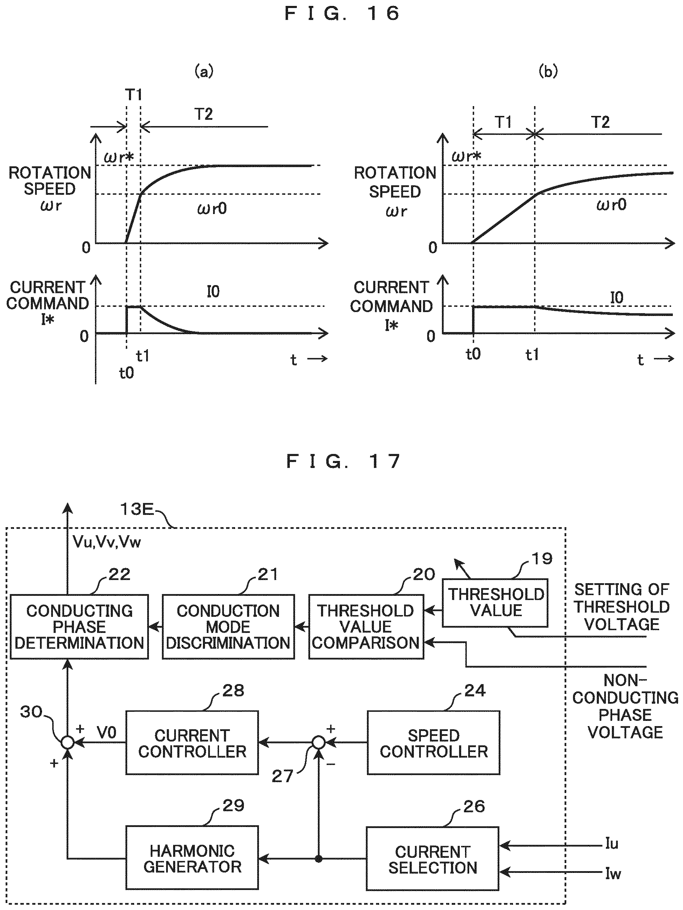

Next, a description will be given of an AC electric motor control device according to Embodiment 6 of the invention using Figs. 15 and 16.

The above embodiments describe a means for obtaining a highly precise threshold value. However, the present embodiment describes an algorithm corresponding to a case in which a PM motor is driven actually using the obtained threshold value.

Fig. 15 is a block diagram of a speed/current controller 13D corresponding to a particular part of the present embodiment. When this block is used instead of the speed/current controller 13 of Fig. 1, Embodiment 6 may be implemented.

Referring to Fig. 15, the speed/current controller 13D includes a threshold value setting unit 19 for setting a threshold value, a threshold value comparator 20 for comparing a detection value of an induced voltage of a non-conducting phase with the threshold value, a conduction mode discrimination unit 21 for determining a mode of conduction to the PM motor based on an output of the threshold value comparator, a conducting phase determination unit 22 for determining a voltage instruction V0 and a three-phase voltage instruction to perform a conduction operation designated by the conduction mode discrimination unit 21, a constant current instruction 10 setting unit 23 for setting a current during activation, a speed controller 24 for outputting a current instruction to control RPM of a PM motor 4, a switcher 25 for switching the current instruction for the PM motor to a constant current instruction or the output of the threshold value comparator, a current selector 26 for selecting a controlled phase current, a subtracter 27 for calculating a deviation between the current instruction and an actual current value, and a current controller 28 for calculating a voltage V0 applied to the PM motor based on a current deviation.

An operation of this block is as below.

As described in the above embodiments, a threshold value is detected as an optimum value with respect to a predetermined current value, and the value is stored in the threshold value setting unit 19. Therefore, when an induced voltage of a non-conducting phase is compared with the threshold value, conduction modes may be ideally switched. However, when a current value obtained when the threshold value is measured is different from an actually flowing current value, ideal switching cannot be achieved. Therefore, the present embodiment is characterized in that the PM motor is driven by a constant current such that the threshold value is identical to an acquired current.

A current equivalent to a current value used for measurement of a threshold value is set in the constant current instruction 10 setting unit 23. During activation, the switcher 25 is switched to a side "L", and a current instruction of a constant value 10 is constantly supplied to the current controller 28. As a result, a driving current corresponds to a condition of a set threshold value, and thus ideal torque driving may be implemented at all the times. In addition, if the switcher 25 is switched to a side "H" such that driving is switched to sensorless driving by a speed induced voltage when RPM increases, and the speed induced voltage becomes great, speed control may be implemented as in the past. A switching speed ωr0 depends on a characteristic of the PM motor, and is in a range of about 5% to 15%.

Fig. 16 illustrates activation waveforms when the present embodiment is used. Fig. 16(a) corresponds to an activation waveform from zero when inertia of a mechanical system including a rotor is small. A speed is increased by performing a control operation such that a current has a constant value 10 from an activation start time t0 to a time t1 at which a speed ωr0 is reached. Thereafter, current instructions are switched by the switcher 25, and the speed controller 24 starts to operate. After switching, a rotation speed increases according to a setting response of the speed controller, and reaches a speed instruction ωr*. As in the figure, when inertia is small, a speed instantaneously increases at a constant current, and a low-speed region is passed in an instant.

On the other hand, when inertia is great, even though a period of time until t1 increases as in Fig. 16(b), a speed may be increased at a torque corresponding to a set current.

In other words, at the time of activation during conduction driving of an AC electric motor, a speed is increased by performing a control operation such that a current is identical to a preset value, and then a speed control function is operated to control rotation.

As described in the foregoing, conventional sensorless driving has difficulty in achieving a high torque in a low-speed region. However, when a starting current and a threshold value appropriate for the starting current are set, a useful acceleration characteristic may be obtained, and thus it is possible to implement a more stable and high-response AC electric motor control device.

### Embodiment 7

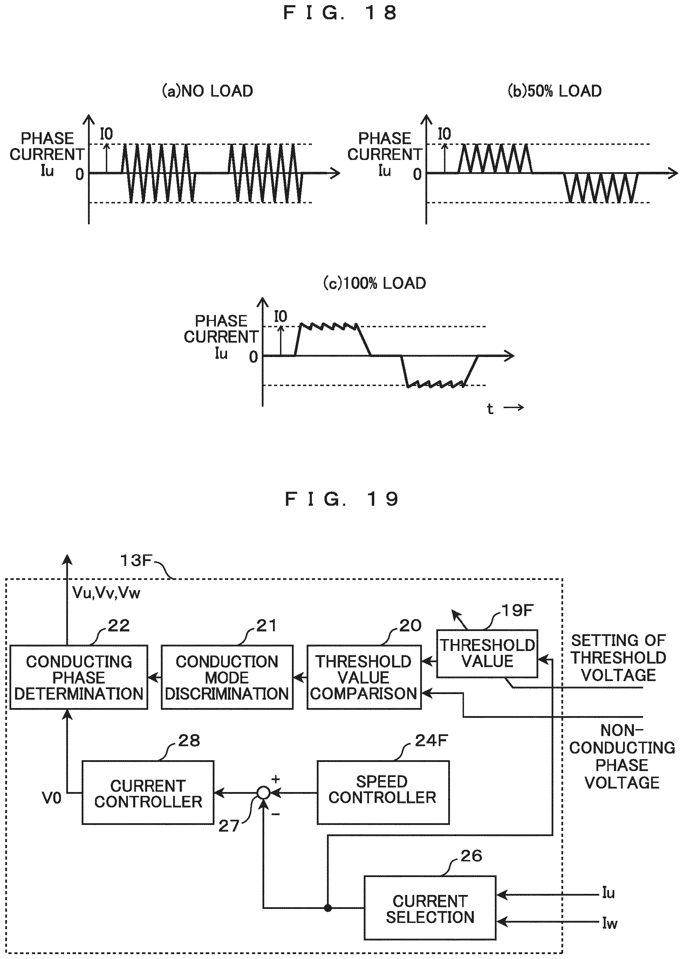

Next, a description will be given of an AC electric motor control device according to Embodiment 7 of the invention using Figs. 17 and 18.

Embodiment 6 relates to an algorithm corresponding to a case in which a PM motor is driven actually using an obtained threshold value, and may implement unprecedented high-torque driving. However, there is a problem in that a speed cannot be controlled since a low-speed region corresponds to constant current driving. The present embodiment shows an example that solves this problem.

Fig. 17 is a block diagram of a speed/current controller 13E corresponding to a particular part of the present embodiment. When this block is used instead of the speed/current controller 13 of Fig. 1, Embodiment 7 may be implemented.

Referring to Fig. 17, when compared to the speed/current controller 13D described above, the speed/current controller 13E newly provides a harmonic generator 29, and further includes an adder 30 for adding an output of the harmonic generator 29 to a voltage instruction V0. Furthermore, the constant current instruction 10 setting unit 23 and the switcher 25 of Fig. 15 are removed. The threshold value setting unit 19, the threshold value comparator 20, the conduction mode discrimination unit 21, the conducting phase determination unit 22, the speed controller 24, the subtracter 27, and the current controller 28 corresponding to the other components are the same as those in Embodiment 6.

An operation of this block is as below.

In the present embodiment, driving by a constant current is not implemented particularly in a low-speed region. A current is controlled based on the speed controller 24 from the time of activation. In this case, current strength is determined by the speed controller, and thus may become an arbitrary value. In addition, the current strength may be different from a value set to a threshold value. Therefore, the harmonic generator 29 is introduced to control a ripple component contained in a current and intentionally apply harmonics such that a current peak corresponding to a condition at which the threshold value is obtained is maintained at all the times.

This state is illustrated in Fig. 18. When a current is set to 10 at the time of acquisition of a threshold value, and current strength is set to a 100% current, the amount of harmonics is increased by the harmonic generator 29 at the time of no load, and a peak value is adjusted to reach 10 (Fig. 18(a)). Similarly, when current strength is set to a 50% current, the amount of harmonics is adjusted such that a peak value reaches 10 (Fig. 18(b)). At the time of 100% load, a current corresponding to 10 is obtained only by a fundamental harmonic, and thus harmonics become unnecessary (Fig. 18(c)).

In other words, a control operation is performed by adding a harmonic component to a voltage such that a peak value of a current flowing through a conducting phase is identical to a preset value at the time of conduction driving of an AC electric motor.

As described in the foregoing, when a current peak value is adjusted by the harmonic generator 29, it is possible to implement control of an arbitrary speed from a low speed and torque control.

### Embodiment 8

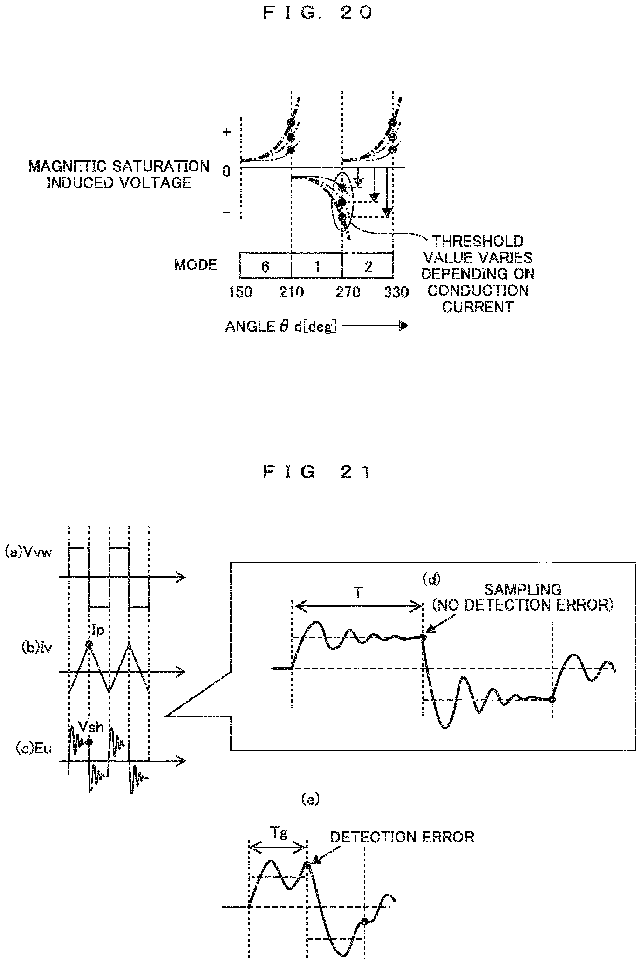

Next, a description will be given of an AC electric motor control device according to Embodiment 8 of the invention using Figs. 19 and 20.

In Embodiment 7, the amount of harmonics is controlled such that an obtained threshold value is identical to a peak value of an actual current, thereby implementing stable speed control from a low-speed region. Even though this scheme is convenient, harmonics need to be applied. Thus, this scheme does not consider an increase in unnecessary electromagnetic noise or harmonic loss. The present embodiment shows an example that solves this problem.

Fig. 19 is a block diagram of a speed/current controller 13F corresponding to a particular part of the present embodiment. When this block is used instead of the speed/current controller 13 of Fig. 1, Embodiment 8 can be implemented.

Referring to Fig. 19, when compared to the above-described speed/current controller 13E, the speed/current controller 13F is mainly characterized in that a threshold value setting unit 19F is newly provided, and the harmonic generator 29 and the adder 30 are removed.

An operation of this block is as below.

The threshold value setting unit 19F stores a threshold value in each conduction mode. However, herein, a threshold value appropriate for a current value is mapped and maintained. As illustrated in Fig. 20, an appropriate value of a threshold value may be changed according to a conducted current, and a threshold value with respect to this current is obtained in the above-described threshold value detection mode. For example, when a voltage of a non-conducting phase is obtained in a process of gradually increasing an AC current value, and this value is maintained as in Embodiment 4, a threshold value appropriate for a current may be easily obtained. When table data is stored in the threshold value setting unit 19F based on threshold value information with respect to a current value obtained in this way, and a threshold value is appropriately changed according to a current, conduction modes may be switched in an optimum state at all the times.

In other words, a relation between a threshold value and a current value obtained in a threshold value detection mode at the time of conduction driving of an AC electric motor is incorporated as a data map or a function, and a threshold value with respect to a driving current is calculated based on the data map or the function to drive the AC electric motor.

Therefore, according to the present embodiment, it is possible to implement high-response and high-accuracy sensorless driving from a low speed without generating electromagnetic noise.

### Embodiment 9

Next, a description will be given of an AC electric motor control device according to Embodiment 9 of the invention using Figs. 21 to 23. The present embodiment describes an example related to pre-adjustment for detecting an induced voltage of a non-conducting phase including threshold value detection.

When a pulse-like AC voltage Vvw is applied as illustrated in Fig. 21(a), a current as in Fig. 21(b) is generated, and an induced voltage Eu of a non-conducting phase is generated. As illustrated in Fig. 21(c), ringing associated with switching is generated in an actual induced voltage. Therefore, in order to avoid this ringing, the induced voltage needs to be sampled in a predetermined time T after switching (Fig. 21(d)). When the predetermined time T is sufficiently short, a voltage in ringing is sampled as in Fig. 21(e), and a correct non-conducting phase voltage cannot be detected.

A ringing frequency is in a region of several tens of kHz to several MHz. Detection cannot be performed in an operation period of motor control in which a sampling period is several hundreds of µs .

Therefore, sampling timing of the non-conducting phase voltage Eu is delayed in each arithmetic processing period, and a period in which ringing is generated is detected.

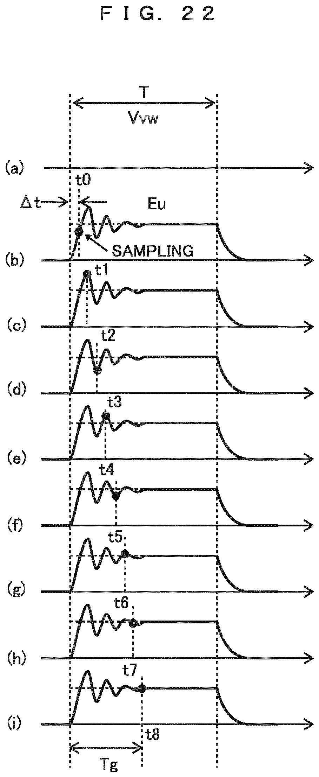

Fig. 22(a) illustrates a state in which a line voltage Vvw is applied for a period T0 at a time t0. This voltage is not repeatedly applied to a motor, and thus an induced voltage associated with the same ringing is generated in the non-conducting phase each time. First, the voltage Eu is sampled at a time t1 delayed from the time t0 by a minute time Δt. In a subsequent period, sampling is performed at a time t2 further delayed by Δt. When this process is repeatedly performed, a whole aspect of a waveform of ringing can be understood. When the fact that a fluctuation of a value is settled is detected as a result of sampling, a size of a ringing period Tg may be detected.

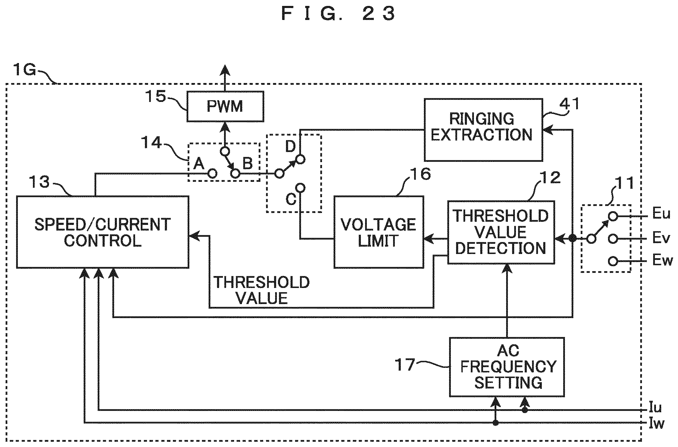

Fig. 23 is a block diagram of a controller 1G corresponding to a particular part of the present embodiment. When this block is used instead of the controller 1 of Fig. 1, Embodiment 9 may be implemented.

Referring to Fig. 23, when compared to the controller 1C of Fig. 11, the controller 1G is mainly characterized in that a ringing extractor 41 and a switcher 14g are newly provided.

An operation of this block is as below. Before a threshold value detection mode is implemented, the switcher 14g is switched to a side "D" to extract a ringing time. The ringing extractor 41 repeatedly applies a pulse as described above. In the meantime, a non-conducting phase voltage is obtained by changing sampling timing. As a result, a convergence time T of ringing is acquired, and a minimum pulse width or a harmonic frequency is set according to the acquired convergence time T.

In other words, as an operation at the time of a start of a threshold value detection mode, a voltage waveform of a non-conducting phase is sampled a plural number of times, a vibration range at the time of a rise in the voltage waveform is detected, and voltage detection timing is set to avoid the detected range. In addition, the sampling performed the plural number of times is presumed to be performed in each arithmetic processing period, and may be implemented by gradually delaying sampling timing.

As described in the foregoing, according to the present embodiment, it is possible to automatically extract a ringing time, acquire a threshold value at a higher accuracy, and implement a high-response and highly-stabilized AC electric motor control device.

### Embodiment 10

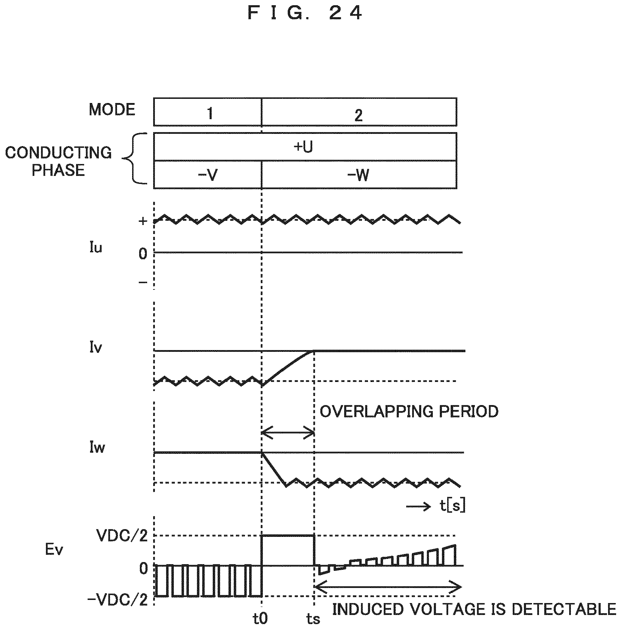

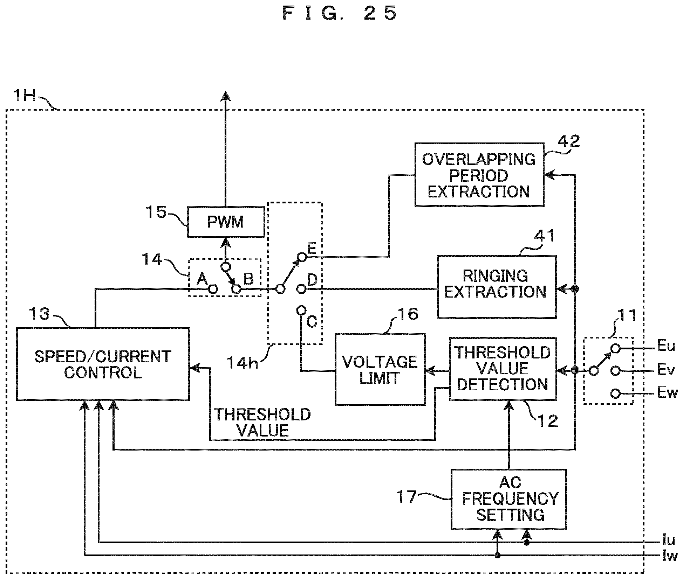

Next, a description will be given of an AC electric motor control device according to Embodiment 10 of the invention using Figs. 24 and 25. The present embodiment describes an example related to a method of obtaining an overlapping period which is an adjustment element peculiar to 120° conduction driving.

As illustrated in Fig. 24, when a conduction mode is switched from mode 1 to mode 2 at a time t0, a current of a phase U continuously flows, but a current is switched from a phase V to a phase W. In this instance, the current of the phase V does not instantly become zero, and is gradually decreased via a free wheel diode. The current of the phase W rises at the same time, and thus the currents simultaneously flow in the three phases in an instant. This period (a period between a time t0 to a time ts of Fig. 24) is referred to as an overlapping period. This period corresponds to a decay time of a current when a conducting phase is changed, and corresponds to a period in which an induced voltage of a non-conducting phase cannot be detected since the phase V, which originally needs to be a non-conducting phase, is conducted.

Therefore, detection of the induced voltage and comparison with a threshold voltage cannot be performed in this period, and thus this period becomes a "standby" period. Since the induced voltage of the non-conducting phase needs to be sampled while avoiding this period, this period needs to be set in advance. As it is understood from Fig. 24, during the overlapping period, since the induced voltage of the non-conducting phase is inevitably clamped to a positive or a negative of a DC voltage, the overlapping period can be confirmed. This period is counted and set as the overlapping period with a margin corresponding to 1 and 2 samples by further taking a transient variation into consideration, and the non-conducting phase is detected.

Fig. 25 is a block diagram of a controller 1H corresponding to a particular part of the present embodiment. When this block is used instead of the controller 1 of Fig. 1, Embodiment 10 may be implemented.

Referring to Fig. 25, when compared to the controller 1G of Fig. 23, the controller 1H is mainly characterized in that an overlapping period extractor 42 and a switcher 14h are newly provided.

An operation of this block is as below. Before implementing a threshold value detection mode or a ringing extraction mode, the switcher 14h is switched to a side "E" to extract an overlapping period. The overlapping period extractor 42 changes a mode in a conducting state as described above to sample a non-conducting phase voltage. A period in which a result of sampling is clamped to a DC voltage of an inverter corresponds to the overlapping period, and thus the period is counted and set as the overlapping period by adding a margin corresponding to 1 and 2 samples from when clamping is released.

In other words, before the threshold value detection mode is implemented, a voltage of a non-conducting phase obtained when a conducting phase is changed is sampled to measure a decay time of a current obtained when the conducting phase is changed, and the overlapping period, in which comparison between a voltage value of the non-conducting phase and a threshold value with respect to the voltage value is not performed, is extracted.

As described in the foregoing, according to embodiments of the invention, it is possible to automatically extract an overlapping period peculiar to 120° conduction, acquire a threshold value at higher accuracy, and implement a high-response and highly stable AC electric motor control device.

### Embodiment 11

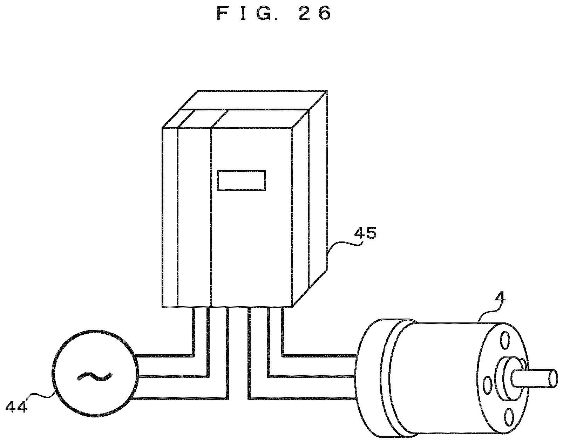

Next, a description will be given of a general-purpose inverter related to Embodiment 11 of the invention using Fig. 26.

Fig. 26 illustrates an AC electric motor system which uses the general-purpose inverter and includes a three-phase AC power supply 44, the general-purpose inverter 45, and a PM motor 4. The general-purpose inverter 45 operates as a controller of the PM motor 4 (AC electric motor) corresponding to an object to be driven.

The controller 1, the voltage detector 2, the inverter 3, and the current sensor 5 described in the above embodiments are included inside the general-purpose inverter 45. The DC power source 31 inside the inverter 3 of Fig. 1 obtains a DC source by rectifying and smoothing the three-phase AC power supply 44. In addition, the controller 1 included in the general-purpose inverter 45 is equipped with a means of the above-described embodiments.

The above-described embodiments may accurately extract a threshold value of the PM motor 4, and perform high-response and high-torque driving from a low speed. Therefore, the above-described embodiments of the invention are particularly suitable for an apparatus such as the general-purpose inverter that presumes connection of various motors. In other words, it is possible to implement high-torque and high-response sensorless driving by connecting an arbitrary motor and extracting a threshold value.

In addition, the above-described embodiments are not limited to the general-purpose inverter, and are applicable to a conveyor, an elevator, an extruding machine, a machine tool, and the like in addition to control of a rotation speed of a compressor (for air conditioning or for a refrigerator), a fan, a pump (a water pump or an oil pump), a spindle motor, a heating-cooling combination appliance, and the like.

Embodiments have been described. However, the invention is not restricted to the above-described embodiments and includes various modified examples. For example, the above-described embodiments are described in detail to facilitate the understanding of the invention, and the invention is not restricted to including all described components. Further, a part of a component of an embodiment may be replaced by a component of another embodiment, and a component of an embodiment may be added to a component of another embodiment. Furthermore, with respect to a portion of a component of each embodiment, another component may be added, removed, and replaced.

### REFERENCE SIGNS LIST

1... Controller, 2... Voltage detector, 3... Inverter, 4... Three-phase AC electric motor (PM motor), 5... Current sensor, 31... DC power source, 32... Main inverter circuit, 33... Gate driver, 11... Multiplexer, 12... Threshold value detector, 13... Speed/current controller, 14... Switcher, 15... PWM generator

## Claims

1. An alternating current (AC) electric motor control device for selecting and conducting two phases of a three-phase AC electric motor (4), switching conducting phases based on a comparison between a voltage value of a remaining non-conducting phase and a threshold value for the voltage value, and rotatably driving the three-phase AC electric motor (4),
**characterized in that**
the setting of the threshold value is provided with a threshold value detection mode for detecting the threshold value, a rotor of the three-phase AC electric motor (4) is once fixed by direct current (DC) conduction in the threshold value detection mode, and then an AC current, an average of which is zero, is conducted between two phases (U,V,W) to obtain the threshold value,
and **in that** a function of sampling a voltage waveform of the non-conducting phase a plurality of number of times, detecting a vibration range at a time of a rise in the voltage waveform, and setting voltage detection timing to avoid the detected range is provided as an operation at a time of a start of the threshold value detection mode for detecting an induced voltage of a non-conducting phase including threshold value detection.

2. The AC electric motor control device according to claim 1, wherein, in the threshold value detection mode, after the rotor is once fixed by conducting a direct current between the two phases of the three-phase AC electric motor (4), an AC current is conducted between two phases (U,V,W) corresponding to a different combination from the two phases (U,V,W) between which the direct current is conducted to obtain the threshold value, and the threshold value is detected by performing at least one combination of the DC conduction and the AC conduction.

3. The AC electric motor control device according to claim 1, wherein, in threshold value detection mode, after the rotor is once fixed by conducting a direct current between the two phases of the three-phase AC electric motor (4), threshold voltages are obtained by conducting AC currents between two types of two phases (U,V,W), respectively, corresponding to different combinations from the two phases (U,V,W) between which the direct current is conducted, and the threshold values are detected by performing at least one combination of the DC conduction and the AC conduction.

4. The AC electric motor control device according to any one of claims 1 to 3, wherein amplitude of the conducted AC current is gradually increased from a start of conduction in the threshold value detection mode.

5. The AC electric motor control device according to any one of claims 1 to 4, comprising
a means having a function of presetting amplitude of an AC current in the threshold value detection mode to adjust a frequency of the AC current such that a set value of the amplitude of the AC current is reached.

6. The AC electric motor control device according to any one of claims 1 to 5, wherein a speed is increased by performing a control operation such that a current is identical to a preset value at a time of activation during conduction driving of the AC electric motor (4), and then a speed control function is operated to control rotation.

7. The AC electric motor control device according to any one of claims 1 to 5, wherein a control operation is performed by adding a harmonic component to a voltage such that a peak value of a current flowing through the conducting phase is identical to a preset value at a time of conduction driving of the AC electric motor.

8. The AC electric motor control device according to any one of claims 1 to 5, wherein a relation between the threshold value and a current value obtained in the threshold value detection mode at a time of conduction driving of the AC electric motor (4) is incorporated as a data map or a function, and a threshold value with respect to a driving current is calculated based on the data map or the function to drive the AC electric motor (4).

9. The AC electric motor control device according to claim 1, wherein the sampling performed the plurality of number of times is presumed to be performed in each arithmetic processing period, and is implemented by gradually delaying sampling timing.

10. The AC electric motor control device according to any one of claims 1 to 9, wherein
before the threshold value detection mode is implemented,
a voltage of a non-conducting phase (U,V,W) obtained when the conducting phase is changed is sampled to measure a decay time of a current obtained when the conducting phase is changed, and
an overlapping period, in which a comparison between a voltage value of the non-conducting phase and a threshold value with respect to the voltage value is not performed, is extracted.

11. The AC electric motor control device according to any one of claims 1 to 10, further comprising:
a controller (1) for obtaining the threshold value;
a voltage detector (2) for detecting a voltage value of each phase (U,V,W) of the three-phase AC electric motor (4);
a current sensor (31) for detecting a current of each phase of the three-phase AC electric motor (4); and
an inverter (3).

12. An AC electric motor system comprising:
the AC electric motor control device according to any one of claims 1 to 11; and
an AC electric motor (4) driven by the control device.

## Patentansprüche

1. Wechselstrom- (AC-) Elektromotor-Steuervorrichtung zum Auswählen und Leiten von zwei Phasen eines Dreiphasen-AC-Elektromotors (4), zum Schalten von leitenden Phasen basierend auf einem Vergleich zwischen einem Spannungswert einer verbleibenden nichtleitenden Phase und einem Schwellenwert für den Spannungswert, und zum rotierenden Antreiben des Dreiphasen-AC-Elektromotors (4),
**dadurch gekennzeichnet, dass**
das Einstellen des Schwellenwerts mit einem Schwellenwertdetektionsmodus zum Detektieren des Schwellenwerts bereitgestellt ist, ein Rotor des Dreiphasen-AC-Elektromotors (4) durch Leiten von Gleichstrom (DC) in dem Schwellenwertdetektionsmodus einmalig fixiert wird, und dass dann ein Wechselstrom, dessen Mittel gleich null ist, zwischen zwei Phasen (U, V, W) geleitet wird, um den Schwellenwert zu erhalten,
und dass eine Funktion des mehrmaligen Abtastens einer Spannungswellenform der nichtleitenden Phase, des Detektierens eines Schwingungsbereichs zu einem Zeitpunkt eines Anstiegs in der Spannungswellenform und des Einstellens der Spannungsdetektionszeitgebung zum Vermeiden des detektierten Bereichs als ein Vorgang zu einem Zeitpunkt eines Beginns des Schwellenwertdetektionsmodus zum Detektieren einer induzierten Spannung einer nichtleitenden Phase, einschließlich der Schwellenwertdetektion, bereitgestellt ist.

2. AC-Elektromotorsteuervorrichtung nach Anspruch 1,
wobei in dem Schwellenwertdetektionsmodus nach dem einmaligen Fixieren des Rotors durch Leiten eines Gleichstroms zwischen den zwei Phasen des Dreiphasen-AC-Elektromotors (4) ein Wechselstrom zwischen zwei Phasen (U, V, W) geleitet wird, der einer anderen Kombination aus den zwei Phasen (U, V, W) entspricht, zwischen denen der Gleichstrom geleitet wird, um den Schwellenwert zu erhalten, und wobei der Schwellenwert durch Durchführen von zumindest einer Kombination des Leitens von Gleichstrom und des Leitens von Wechselstrom detektiert wird.

3. AC-Elektromotorsteuervorrichtung nach Anspruch 1,
wobei in dem Schwellenwertdetektionsmodus nach dem einmaligen Fixieren des Rotors durch Leiten eines Gleichstroms zwischen den zwei Phasen des Dreiphasen-AC-Elektromotors (4) Schwellenspannungen durch Leiten von Wechselströmen zwischen jeweils zwei Arten von zwei Phasen (U, V, W) erhalten werden, die anderen Kombinationen der zwei Phasen (U, V, W) entsprechen, zwischen denen der Gleichstrom geleitet wird, und wobei die Schwellenwerte durch Durchführen von zumindest einer Kombination des Leitens des Gleichstroms und des Leitens des Wechselstroms detektiert werden.

4. AC-Elektromotorsteuervorrichtung nach einem der Ansprüche 1 bis 3, wobei die Amplitude des geleiteten Wechselstroms ab dem Beginn des Leitens in dem Schwellenwertdetektionsmodus allmählich erhöht wird.

5. AC-Elektromotorsteuervorrichtung nach einem der Ansprüche 1 bis 4, die Folgendes umfasst:
ein Mittel, das eine Funktion zum Voreinstellen der Amplitude eines Wechselstroms in dem Schwellenwertdetektionsmodus aufweist, um eine Frequenz des Wechselstroms so anzupassen, dass ein eingestellter Wert der Amplitude des Wechselstroms erreicht wird.

6. AC-Elektromotorsteuervorrichtung nach einem der Ansprüche 1 bis 5, wobei eine Drehzahl durch Durchführen eines Steuervorgangs so erhöht wird, dass ein Strom zu einem Zeitpunkt der Aktivierung während des Leitungsansteuerns des AC-Elektromotors (4) identisch mit einem voreingestellten Wert ist, und dann eine Drehzahlsteuerfunktion zur Rotationssteuerung ausgeführt wird.

7. AC-Elektromotorsteuervorrichtung nach einem der Ansprüche 1 bis 5, wobei ein Steuervorgang durch Hinzufügen einer Oberwellenkomponente zu einer Spannung so durchgeführt wird, dass ein Spitzenwert eines Stroms, der durch die leitende Phase fließt, zu einem Zeitpunkt der Leitungsansteuerung des AC-Elektromotors identisch mit einem voreingestellten Wert ist.

8. AC-Elektromotorsteuervorrichtung nach einem der Ansprüche 1 bis 5, wobei eine Beziehung zwischen dem Schwellenwert und einem Stromwert, der in dem Schwellenwertdetektionsmodus zu einem Zeitpunkt der Leitungsansteuerung des AC-Elektromotors (4) erhalten wird, als eine Datenabbildung oder eine Funktion aufgenommen wird, und wobei ein Schwellenwert in Bezug auf einen Antriebsstrom basierend auf der Datenabbildung oder der Funktion berechnet wird, um den AC-Elektromotor (4) anzutreiben.

9. AC-Elektromotorsteuervorrichtung nach Anspruch 1, wobei angenommen wird, dass das Abtasten, das mehrere Male durchgeführt wird, in jedem arithmetischen Verarbeitungszeitraum durchgeführt wird, und durch allmähliches Verzögern des Zeitpunkts des Abtastens implementiert wird.

10. AC-Elektromotorsteuervorrichtung nach einem der Ansprüche 1 bis 9, wobei
vor dem Implementieren des Schwellenwertdetektionsmodus eine Spannung einer nichtleitenden Phase (U, V, W), die erhalten wird, wenn die leitende Phase verändert wird, abgetastet wird, um eine Abklingzeit eines Stroms zu messen, die erhalten wird, wenn die leitende Phase verändert wird und
ein Überlagerungszeitraum, in dem ein Vergleich zwischen einem Spannungswert der nichtleitenden Phase und einem Schwellenwert in Bezug auf den Spannungswert nicht durchgeführt wird, extrahiert wird.

11. AC-Elektromotorsteuervorrichtung nach einem der Ansprüche 1 bis 10, die ferner Folgendes umfasst:
eine Steuerung (1) zum Erhalten des Schwellenwerts;
einen Spannungsdetektor (2) zum Detektieren eines Spannungswerts für jede Phase (U, V, W) des Dreiphasen-AC-Elektromotors (4);
einen Stromsensor (31) zum Detektieren eines Stroms jeder Phase des Dreiphasen-AC-Elektromotors (4); und
einen Wechselrichter (3).

12. AC-Elektromotorsystem, das Folgendes umfasst:
eine AC-Elektromotorsteuervorrichtung nach einem der Ansprüche 1 bis 11; und
einen AC-Elektromotor (4), der durch die Steuervorrichtung angetrieben wird.

## Revendications

1. Dispositif de commande de moteur électrique à courant alternatif (AC) pour sélectionner et conduire deux phases d'un moteur électrique à courant alternatif triphasé (4), commuter des phases conductrices sur la base d'une comparaison entre une valeur de tension d'une phase non conductrice restante et une valeur de seuil pour la valeur de tension, et actionner la rotation du moteur électrique à courant alternatif triphasé (4),
**caractérisé en ce que** :
le réglage de la valeur de seuil est pourvu d'un mode de détection de valeur de seuil, un rotor du moteur électrique à courant alternatif triphasé (4) est fixé, une fois, par conduction de courant continu (DC) dans le mode de détection de valeur de seuil, et ensuite un courant alternatif, dont une moyenne est nulle, est conduit entre deux phases (U, V, W) en vue d'obtenir la valeur de seuil ; et
**en ce qu'**une fonction d'échantillonnage d'une forme d'onde de tension de la phase non conductrice, à plusieurs reprises, de détection d'une plage de vibration au moment d'une élévation de la forme d'onde de tension, et de réglage d'une temporisation de détection de tension pour éviter la plage détectée, est fournie en tant qu'une opération à un instant de démarrage du mode de détection de valeur de seuil pour détecter une tension induite d'une phase non conductrice incluant une détection de valeur de seuil.

2. Dispositif de commande de moteur électrique à courant alternatif selon la revendication 1, dans lequel, dans le mode de détection de valeur de seuil, après que le rotor a été fixé une fois en conduisant un courant continu entre les deux phases du moteur électrique à courant alternatif triphasé (4), un courant alternatif est conduit entre deux phases (U, V, W) correspondant à une combinaison différente des deux phases (U, V, W) entre lesquelles le courant continu est conduit, pour obtenir la valeur de seuil, et la valeur de seuil est détectée en mettant en œuvre au moins une combinaison de la conduction de courant continu et de la conduction de courant alternatif.

3. Dispositif de commande de moteur électrique à courant alternatif selon la revendication 1, dans lequel, dans le mode de détection de valeur de seuil, après que le rotor a été fixé une fois en conduisant un courant continu entre les deux phases du moteur électrique à courant alternatif triphasé (4), des tensions de seuil sont obtenues en conduisant des courants alternatifs entre deux types de deux phases (U, V, W), respectivement, correspondant à des combinaisons différentes des deux phases (U, V, W) entre lesquelles le courant continu est conduit, et les valeurs de seuil sont détectées en mettant en œuvre au moins une combinaison de la conduction de courant continu et de la conduction de courant alternatif.

4. Dispositif de commande de moteur électrique à courant alternatif selon l'une quelconque des revendications 1 à 3, dans lequel l'amplitude du courant alternatif conduit est progressivement augmentée à partir d'un début de conduction dans le mode de détection de valeur de seuil.

5. Dispositif de commande de moteur électrique à courant alternatif selon l'une quelconque des revendications 1 à 4, comprenant :
un moyen présentant une fonction de préréglage d'amplitude d'un courant alternatif dans le mode de détection de valeur de seuil pour ajuster une fréquence du courant alternatif, de sorte qu'une valeur de consigne de l'amplitude du courant alternatif est atteinte.

6. Dispositif de commande de moteur électrique à courant alternatif selon l'une quelconque des revendications 1 à 5, dans lequel une vitesse est augmentée en mettant en œuvre une opération de commande, de sorte qu'un courant est identique à une valeur préréglée à un instant d'activation au cours d'un actionnement de conduction du moteur électrique à courant alternatif (4), et ensuite une fonction de commande de vitesse est actionnée en vue de commander la rotation.

7. Dispositif de commande de moteur électrique à courant alternatif selon l'une quelconque des revendications 1 à 5, dans lequel une opération de commande est mise en œuvre en ajoutant une composante harmonique à une tension, de sorte qu'une valeur de crête d'un courant circulant à travers la phase conductrice est identique à une valeur préréglée à un instant d'actionnement de conduction du moteur électrique à courant alternatif.

8. Dispositif de commande de moteur électrique à courant alternatif selon l'une quelconque des revendications 1 à 5, dans lequel une relation entre la valeur de seuil et une valeur de courant obtenue dans le mode de détection de valeur de seuil, à un instant d'actionnement de conduction du moteur électrique à courant alternatif (4), est incorporée sous la forme d'une carte de données ou d'une fonction, et une valeur de seuil relativement à un courant d'actionnement est calculée sur la base de la carte de données ou de la fonction pour actionner le moteur électrique à courant alternatif (4).

9. Dispositif de commande de moteur électrique à courant alternatif selon la revendication 1, dans lequel l'échantillonnage mis en œuvre à plusieurs reprises est présumé être mis en œuvre à chaque période de traitement arithmétique, et est mis en œuvre en retardant progressivement la temporisation d'échantillonnage.

10. Dispositif de commande de moteur électrique à courant alternatif selon l'une quelconque des revendications 1 à 9, dans lequel,
avant que le mode de détection de valeur de seuil ne soit mis en œuvre,
une tension d'une phase non conductrice (U, V, W), obtenue lorsque la phase conductrice est modifiée, est échantillonnée en vue de mesurer un temps de décroissance d'un courant obtenu lorsque la phase conductrice est modifiée ; et
une période de chevauchement, au cours de laquelle une comparaison entre une valeur de tension de la phase non conductrice et une valeur de seuil relativement à la valeur de tension n'est pas mise en œuvre, est extraite.

11. Dispositif de commande de moteur électrique à courant alternatif selon l'une quelconque des revendications 1 à 10, comprenant en outre :
un contrôleur (1) pour obtenir la valeur de seuil ;
un détecteur de tension (2) destiné à détecter une valeur de tension de chaque phase (U, V, W) du moteur électrique à courant alternatif triphasé (4) ;
un capteur de courant (31) destiné à détecter un courant de chaque phase du moteur électrique à courant alternatif triphasé (4) ; et
un onduleur (3).

12. Système de moteur électrique à courant alternatif comprenant :
le dispositif de commande de moteur électrique à courant alternatif selon l'une quelconque des revendications 1 à 11 ; et
un moteur électrique à courant alternatif (4) actionné par le dispositif de commande.
